(19) Europäisches Patentamt / European Patent Office / Office européen des brevets

(11) **EP 4 531 250 A1**

(12) **EUROPEAN PATENT APPLICATION**

(43) Date of publication:
**02.04.2025 Bulletin 2025/14**

(21) Application number: **24201415.7**

(22) Date of filing: **19.09.2024**

(51) International Patent Classification (IPC):
*H02K 11/215* (2016.01)   *H02K 41/03* (2006.01)
*H02P 6/00* (2016.01)   *H02P 6/16* (2016.01)
*H02P 25/064* (2016.01)

(52) Cooperative Patent Classification (CPC):
**H02K 41/031; H02K 11/215; H02P 6/006;
H02P 6/16; H02P 25/064**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 AT 507782023**

(71) Applicant: **ABB Schweiz AG
5400 Baden (CH)**

(72) Inventors:
• **Almeder, Alexander
3910 Zwettl (AT)**
• **Weber, Andreas
5020 Salzburg (AT)**
• **Flixeder, Stefan
4840 Vöcklabruck (AT)**

(74) Representative: **Patentanwälte Pinter & Weiss OG
Prinz-Eugen-Straße 70
1040 Wien (AT)**

(54) **METHOD AND ELECTROMAGNETIC TRANSPORT DEVICE FOR DETECTING A MOVER**

(57)    In order to accurately and reliably detect a new mover (3new) transferred to an electromagnetic transport device (1) with less effort compared to the known prior art, an introduction area (G) which extends over a part of a stator (2) of the electromagnetic transport device (1) and comprises at least one position sensor (Si) is defined, the new mover (3new) is moved through the introduction area (G), a new sensor response ($SA_{new}$) which is detected by the at least one position sensor (Si) arranged in the introduction area (G) when the new mover (3new) is moved through the introduction area (G) is monitored, and a control of drive coils ($L_{m1},....,L_{mn}$) of the electromagnetic transport device (1), which interact with the new mover (3new) to move the new mover (3new), is started when the new sensor response ($SA_{new}$) reaches or exceeds a predefined activation criterion ($A_{cri}t$).

Fig. 2

EP 4 531 250 A1

**Description**

The present invention relates to a method for operating an electromagnetic transport device comprising a stator on which a plurality of electric drive coils are arranged, effective area movers located in a magnetic effective area of the stator, and a control unit, which electrically controls drive coils which are arranged on the stator and interact with the effective area movers to move the effective area movers, wherein a plurality of position sensors are arranged on the stator and a plurality of position magnets are arranged on each of the effective area movers, so that at least one position sensor arranged on the stator detects, in the form of a sensor response, a magnetic field caused by a position magnet which is arranged on an effective area mover and interacts with the at least one position sensor, wherein a new mover is introduced into the magnetic effective area of the stator as a new effective area mover.

Furthermore, the present invention relates to an electromagnetic transport device with a stator and a new mover which is introduced into a magnetic effective area of the stator.

In modern transportation systems, it is oftentimes necessary to move transport units, i.e. parts, components, other goods, etc., over sometimes long transport distances between processing stations that are spatially separated from each other. Various types of transport and conveying systems are known for this purpose, wherein continuous conveyors are used frequently. Conventional continuous conveyors are typically conveyor belts in which a rotary movement of an electric drive is converted into a linear movement of a conveyor belt on which transport units mentioned are moved. The flexibility of conventional continuous conveyors is usually considerably limited; in particular, individual transport of individual transport units is usually not possible. To remedy this and to meet the requirements of modern and flexible transport systems, electromagnetic transport facilities are increasingly being used in modern production technology, such as long stator linear motors (LLMs) and planar motors (PMs), in which the goods to be transported are picked up and moved by a plurality of movers.

LLMs, their applications and their mode of operation are well known from the prior art. LLMs generally consist of a stator (also referred to as "long stator linear motor stator" or "LLM stator") and at least one mover (also referred to as "shuttle" or "transport unit"), which is used to transport a component or other goods in the aforementioned case of a transport system. As described in US 6,876,107 B2, an LLM stator is usually composed of a plurality of stator segments, with a plurality of drive coils (also "LLM coils") being arranged in a fixed position next to one another on the stator or on the stator segments. The stator segments can have different geometries, such as straight lines, curves, switches, and can be assembled into a desired LLM stator by lining them up. The LLM stator forms a conveyor section along which one or more transport units can be moved. The transport units are held and guided on the conveyor section.

PMs are also known in the prior art. For example, US 9,202,719 B2 discloses the basic structure and basic mode of operation of a PM. A PM essentially also has a stator which, in a PM, in contrast to an LLM, forms a transport plane in which one or more transport units can be moved at least two-dimensionally. In PMs, drive coils are usually arranged in the transport plane, in some designs also in multiple planes.

In order to bring about a controlled movement of a mover for transporting a part or component in PMs or LLMs and subsequently to be able to control and/or regulate it, drive magnets (permanent magnets or electromagnets) are provided on a mover adjacent to the drive coils installed on the stator, and position sensors (AMR sensors, Hall elements, etc.) are provided on the stator. By controlling the drive coils, a moving magnetic field, a so-called magnetic drive field, can be generated, which interacts with the drive magnets of the mover to move the mover. In a known manner, the drive coils are controlled in particular by control units which are provided for this purpose and in an equally known manner output firing pulses to semiconductor switches, such as IGBT modules in particular, in order to apply corresponding coil voltages to the drive coils to generate a drive current. Drive coils that are controlled and therefore energized for the purpose of generating a magnetic drive field are referred to in particular as "active" drive coils. In order to move a mover along a stator, some of the drive coils are always active drive coils, wherein typically unenergized drive coils ongoingly become active drive coils and active drive coils become unenergized drive coils. A mover can thus be moved in the direction of the moving magnetic drive field.

Further explanations of LLMs and PMs as well as a variety of design options for LLMs and PMs can be found in WO 2013/143783 A1, WO 98/50760 A2, US 6,876,107 B2, US 2013/0074724 A1, WO 2004/103792 A1 or EP 1 270 311 B1, among others, so that no further implementation details of these drive forms will be discussed here.

When using PMs and/or LLMs in a transport system mentioned at the outset, it is oftentimes necessary to provide switches or deflection arms or turntables, in particular to enable complex and intelligent path planning or path implementations. Examples of this can be found in documents US 2013/0074724 A1 and EP 3 904 249 B1.

Arrangements are also known in which various conveying means, such as the continuous conveyors mentioned at the beginning in the form of conveyor belts, are combined with LLMs and/or PMs in order to be able to precisely match the resulting conveyor sections to the requirements of a transport system. Parts or components initially transported on conveyor belts are often taken over by movers moving in an LLM or PM for further transportation, in order to be transferred back to a conveyor belt if necessary.

An increasingly important implementation form of flexible transport systems is the combination of LLMs or PMs with external feeders for introducing new movers into an LLM or PM and/or for removing movers from an LLM or PM. This design, in which movers can be introduced ("fed in") into an LLM or PM or removed ("fed out") therefrom as required, allows targeted control of transport capacities within a transport system with multiple LLMs or PMs. If two or more LLMs are provided in a transport system, movers can be transferred from a low-utilized LLM to a higher-utilized LLM in the event of peak loads on one LLM. The additionally available option of being able to arrange parts or components to be transported on a mover already outside of an LLM or PM without having to rely on a sometimes time-consuming transfer of the part or component by a mover at an interface to an LLM or PM also offers scope for often significant increases in efficiency.

However, one disadvantage of the aforementioned feeding in and feeding out of movers is that newly introduced movers are usually not known a priori to a controller of an LLM or PM. In current industrial practice, it is therefore necessary to provide information to the controller of an LLM or PM sufficiently early about an expected new mover so that it can be integrated into the operation of the LLM or PM in a clean and orderly manner. Typically, it is necessary to inform the controller of the exact point in time and the precise location of the arrival of a new mover. However, these requirements can often not be met in practice with the commonly used feeders. If conveyor belts are used as feeders for new movers, the position of a mover on the conveyor belt can usually not be specified or set exactly, which means that the exact point in time at which an LLM stator or a PM stator is reached cannot be predicted exactly either. The consequences of such imprecision and inaccuracies range from an imprecise and disruptive start of movement of the new mover in the LLM or PM up until damage to the transported goods and/or mover.

In order to avoid these difficulties, known approaches use complex and usually expensive sensors, such as light barriers in particular, to precisely determine the transfer location and transfer point in time and to be able to communicate these to a control unit of an LLM or PM. Although this approach is obviously associated with increased effort and increased costs, no alternative solutions for the problems described can be found in the prior art.

It is therefore an object of the present invention to accurately and reliably detect with little effort a mover transferred to an electromagnetic transport device.

This object, for an electromagnetic transport system mentioned at the outset, is achieved by the features of the characterizing portion of the independent claims. The independent claims describe a method for operating an electromagnetic transport device and an electromagnetic transport device.

According to the invention, during the operation of an electromagnetic transport device as mentioned at the outset, which may in particular be an LLM or a PM, an introduction area which extends over a part of the stator and comprises at least one position sensor of the plurality of position sensors arranged on the stator is defined, and the new mover is moved through the introduction area for introduction into the magnetic effective area of the stator. Based on this, a new sensor response which is detected, when the new mover is introduced, by the at least one position sensor arranged in the introduction area is monitored and the control of drive coils, which interact with the new mover to move the new mover, by the controller is started after the new sensor response has reached or exceeded a predefined activation criterion.

The method according to the invention makes it possible to efficiently and reliably detect a new mover fed into the magnetic effective area of the stator through the introduction area, which can preferably be defined as a plane, a straight line or as a point that coincides with the position of the at least one position sensor, without having to rely on complex additional sensor technology. The present invention describes a method for the online identification of newly introduced movers, which functions reliably using only the sensors already present in LLMs or PMs, i.e., using only the position sensors already present in LLMs or PMs, and can also be carried out fully automatically. Expensive additional sensors, such as light barriers in the area of transfer positions, are not necessary in the context of the invention.

In advantageous embodiments of the invention, the new sensor response, which is detected when the new mover is introduced by the at least one position sensor arranged in the introduction area, can be monitored cyclically to detect a new mover, or the predefined activation criterion can correspond to a predefined minimum overlap of the at least one position sensor arranged in the introduction area by the new mover. In this way, the detection method according to the invention can be precisely adapted to the special requirements of different applications, in particular to optimize the accuracy and robustness of the detection of new movers. Further possibilities in this regard are explained in the course of the following explanations, but among other things include deriving the activation criterion from a predefined model sensor response of the position sensor arranged in the introduction area or low-pass filtering the new sensor response before comparing it with the activation criterion.

A further, particularly advantageous embodiment of the invention is obtained in that a sensor response gradient is determined from a first value of the new sensor response detected at a first point in time and from a second value of the new sensor response, which differs from the first value and is detected at a second point in time, in that a predicted position of the new mover is determined from the sensor response gradient and a position of the at least one position sensor arranged in the introduction area, and in that the predicted position is submitted to the control unit for integrating the new mover into an internal position detection system running in the control unit.

As will be explained in detail later, the intended detection according to the invention of a new mover in a plurality of cases relevant to industrial practice must be separated from an actual integration of a new mover into a position detection system, which usually runs internally in the control units of the electromagnetic transport units under consideration. The same applies to position control systems provided in such control units for controlling the position of the effective area movers in question. Usually, after an initial detection, further steps are required in order to actually take a new mover into account in position control. The embodiment of the invention described above enables such an integration, and thus, in addition to an efficient detection of new movers, also an immediate, direct consideration of a new mover in an internal position detection and/or position control system.

The present invention is explained in more detail below with reference to Figures 1 to 6, which show exemplary, schematic and non-limiting advantageous embodiments of the invention. In the drawing:

Fig.1 shows a transport system with a long stator linear motor and a conveyor belt,

Fig.2 shows a transfer position between a conveyor belt and a transport section of a long stator linear motor,

Fig.3a, Fig.3b show signals of an AMR sensor for detecting a position of a mover,

Fig.4 shows a processing of signals from an AMR sensor,

Fig.5 shows a flow chart for implementing the invention,

Fig.6 shows a planar motor with an introduction area according to the invention in plan view.

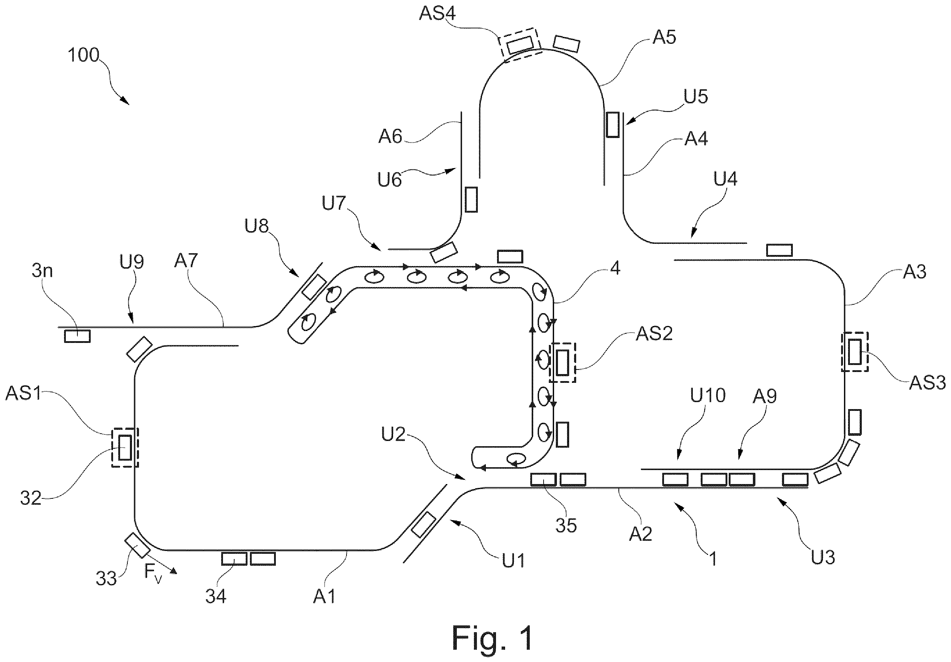

In order to illustrate the invention, Fig. 1 shows an exemplary transport system 100 comprising a conveyor belt 4 and an electromagnetic transport device 1 in the form of a long stator linear motor (LLM), which forms a plurality of transport sections A1 ... A7. If a component is referred to in general terms in the following explanations, reference signs are used alone, for example mover 3, transport section A, transfer position U, etc. If, on the other hand, a specific component is referred to in the figures, the reference sign is supplemented with a consecutive index for the purpose of differentiation, for example mover 31, ..., 3n, transport section A1, A2, transfer position U1, U2 etc. As mentioned, the present invention can also be used with planar motors (PM) and is by no means limited to LLMs.

The modular structure of transport sections A1 ... A7 and conveyor belt 4 enables a flexible design of the transport system 100, but can also make a plurality of transfer positions U1 ... U10 necessary, at which movers 31 ... 3n (for reasons of clarity, not all movers are marked with a reference sign in Fig.1) moving in the transport system 100 are transferred from one transport section A1 ... A7 to another or to the conveyor belt 4. Generally speaking, in the transport system 100 there is at least one transport section A1 ... A7 designed as an electromagnetic transport device 1 (LLM or PM) and at least one external feeder (for example a conveyor belt 4) for introducing a mover 3 into a magnetic effective area MB of the electromagnetic transport device 1.

The transport sections A1 ... A7 each form a part of a long stator 2 of the mentioned LLM in a known manner. Along the transport sections A1 ... A7, a plurality of electric drive coils are therefore arranged in the longitudinal direction in a known manner (not shown in Fig. 1 for reasons of clarity), which interact with excitation magnets on the movers 31 ... 3n. In an equally well-known manner, by controlling electrical stator currents flowing in these drive coils, a propulsive force $F_v$ is generated for each of the movers 31 ... 3n and this propulsive force moves the movers 31 ... 3n in the longitudinal direction along the transport section A1 ... A7 in which they are currently located. Each mover 31 ... 3n can be moved individually (speed, acceleration, path) and independently (except for the avoidance of possible collisions) of the other movers 31 ... 3n. Since the basic principles of an LLM are sufficiently well known, for example from US 6,876,107 B2 or from EP 3 109 998 B1, further LLM-related details will not be discussed here.

As mentioned, transfer positions U1 ... U10 can be arranged along the transport route of the transport system 100 as required, wherein various types of transfer positions U1 ... U10 are conceivable, such as switches or deflection arms or turntables. At the transfer position U10, for example, a transition from a one-sided transport section A2 to a two-sided transport section A9 is provided. Starting from certain transfer positions, for example the transfer position U2, a mover 3 can be moved further, for example, on the transport section A2 or the conveyor belt 4. At a transfer position U1 (change position), a mover 3 is transferred from the one-sided transport section A1 to the one-sided transport section A2. A one-sided transport section is to be understood here as a transport section on which drive coils are only provided on one side of a mover 3 (viewed in the direction of movement). In the case of a two-sided transport section, drive coils are provided on both sides of a mover 3. A mover 3 can also have excitation magnets on one side or on both sides.

A number of work stations AS1 ... AS4 can also be arranged along the transport route of the transport system 100, in which manipulations can be carried out on components transported with the movers 3 or on the movers 3 themselves. The work stations AS1 and AS2 can, for example, be designed as an infeed and/or outfeed station for the transport system 100 as a whole, i.e. that, for example, finished components or finished goods are removed from a mover 3 or components to be processed are transferred to a mover 3. In the work stations AS1 ... AS4, however, processing steps can of course also be carried out on the components to be transported. The movers 3 can be stopped in a work station AS1 ... AS4 for processing, for example in a filling station in which empty bottles that are moved with a mover 3 are filled, or for example in a tempering station in which transported components or other transported goods are temperature-treated, possibly at a standstill but possibly also at a different speed than between the work stations AS1 ... AS4.

As explained earlier, a combination of an LLM 1 with a conveyor belt 4 allows, among other things, targeted allocation of transport capacities within a transport system 100. In the present case, shown in Fig. 1, movers 3 can be moved by means of conveyor belts 4 from the transfer station U2 to the transfer station U7 as required, for example if there is a reduced demand for movers 3 in transport section A9. In many cases, conveyor belts 4 also offer a cost-effective way of expanding an existing transport system 100, compared to otherwise usually more expensive LLM or PM stators. Conveyor belts are often used in areas where there are no requirements for the accuracy of the movement of a mover 3 or for an individual movement of individual movers 3. An LLM or PM is often used where high accuracy is required regarding the movement of a mover 3 or where individual movements of individual movers 3 are needed.

As explained in detail above, the infeed and outfeed of movers 3 by means of conveyor belts 4 or generally by means of external feeders, into a transport section A1 ... A7, which are parts of an LLM 1 or PM, often has the disadvantage that newly introduced movers are typically not known a priori to a control unit C of an LLM 1, and consequently the control unit C does not have any position information about a new mover 3, which is required for correct energization of the drive coils in the stator 2 to move the mover 3. In previous industrial practice, the position of a new mover 3 was communicated separately to a control unit C of an LLM 1 for this reason, usually after detection of the position using measuring technology or sensors specially provided for this purpose, wherein tolerable maximum deviations between a communicated position and a true position typically had to be in a range of +/-4mm. If this tolerance was not adhered to, in many cases this resulted in an incorrect energizing of the aforementioned drive coils, which in extreme cases could even result in a reversal of the direction of movement of a mover 3 that is fed in, or could lead to collisions between movers 3. Such accuracy requirements are often difficult to realize when using conveyor belts 4 as feeders, or external feeders in general.

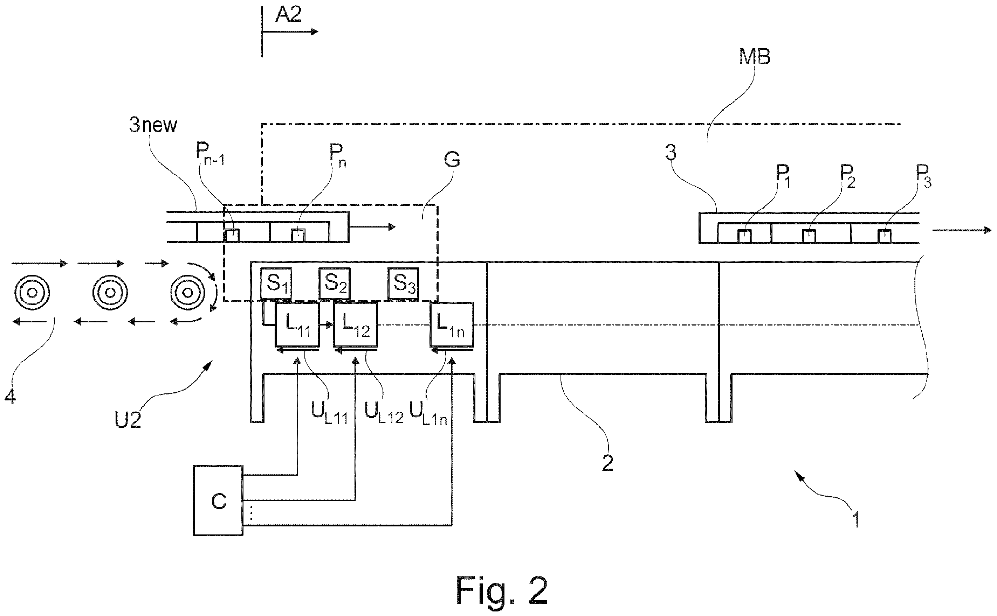

How to proceed according to the invention, in particular to solve the problems of detection and position detection of a new mover 3, is explained below with reference to Fig. 2. For this purpose, Fig. 2 shows an example of the transfer position U2 already shown in Fig. 1, at which moving movers 3 are transferred from the conveyor belt 4 to the transport section A2, in a higher level of detail. The transport section A2 of the LLM 1 in question forms a part of the stator 2 of the LLM 1 according to the above explanations, on which a plurality of electric drive coils $L_{m1}$, ..., $L_{mn}$ are arranged (the running variable m stands here for the parts, i.e. for example segments of the stator 2, the index 1...n for the drive coils provided in the respective part).

In order to explain the invention, it is important in this context to subdivide the movers 3 that occur. On the one hand, a distinction is made between movers 3 that are already located in a magnetic effective area MB of the stator 2. The magnetic effective area MB is understood here as a spatial area in which a mover 3 can interact with the aforementioned electric drive coils $L_{m1}$, ..., $L_{mn}$ of an LLM 1 and can thus be moved by electric drive coils $L_{m1}$, ..., $L_{mn}$ of the LLM 1. Movers 3 located in the magnetic effective area MB are referred to as effective area movers 3. On the other hand, so-called "new movers" 3new are considered, which are newly introduced into the magnetic effective area MB of the stator 2 by the conveyor belt 4, are not yet in the magnetic effective area MB at a point in time under consideration and therefore cannot yet be moved by the electric drive coils $L_{m1}$, ..., $L_{mn}$ at the point in time under consideration. New movers 3new must be detected reliably and precisely.

Fig.2 also shows a control unit C, already mentioned multiple times, which electrically controls drive coils $L_{m1}$, ..., $L_{mn}$ which are arranged on the stator 2 and interact with the effective area movers 3 to move the effective area movers 3. For the sake of simplicity, only a few drive coils $L_{m1}$, ..., $L_{mn}$ are shown in Fig. 2. For practical implementation, a control unit C can be realized in particular with the aid of suitable microprocessor-based hardware, such as a microcontroller, or with the aid of integrated circuits (ASIC, FPGA). As mentioned earlier, "electrical control" of the drive coils $L_{m1}$, ..., $L_{mn}$ means the application of corresponding coil voltages $U_{L11}$, ..., $U_{L1n}$ to generate drive currents to the drive coils $L_{m1}$, ..., $L_{mn}$. This can be realized by outputting firing pulses to semiconductor switches provided for this purpose, such as IGBT modules in particular.

Furthermore, a plurality of position sensors $S_n$ (the variable n serves as a running index) are arranged distributed along the transport direction on the part of the stator 2 of the LLM 1 shown, which is formed by the transport section A2, and a plurality of magnets $P_{n-1}$, $P_n$, ... are provided on the occurring movers 3, i.e. both on the effective area movers 3 and on the new movers 3new. The magnet, i.e. the position magnet, $P_k$, which is

referenced with the running index k for the purpose of clear notation, can, for example, be an excitation magnet of the mover 3, or a position magnet $P_k$ can be arranged on the mover 3 in addition to the excitation magnets of the mover 3. Position sensors $S_n$ arranged on the stator 2 detect magnetic fields caused by position magnets $P_k$, which interact with a corresponding position sensor $S_n$, in the form of a sensor response SA.

In order to now simply, accurately and reliably detect a new mover 3new according to Fig.2, which is introduced into the magnetic effective area MB of the stator 2 as a new effective area mover 3, without additional sensory effort and thus eliminate the above problems, the invention provides for first defining an introduction area G. The introduction area G according to the invention extends over a part of the stator 2 of the LLM (or PM) and comprises at least one position sensor, in the case of Fig. 2 the position sensors $S_1$, $S_2$, $S_3$, of the plurality of position sensors $S_n$ arranged on the stator 2. According to the invention, a new sensor response $SA_{new}$ which is detected by at least one position sensor $S_1$, $S_2$, $S_3$ arranged in the introduction area G when the new mover 3new is introduced is monitored, and the control unit C does not start to control drive coils $L_{m1}$, ..., $L_{mn}$, which interact with the new transport unit 3new to move the new mover 3new, until the new sensor response $SA_{new}$ fulfills a predefined activation criterion $A_{crit}$.

With regard to the definition of the introduction area G, it should be noted that an introduction area G is to be understood as a logical area which is defined in particular in the control unit C but does not necessarily have to be a physically delimited, geometric area. This can be a section of the three-dimensional space (particularly in PM applications), but in the case of LLM 1 the introduction area G can also be defined as a plane, a straight line or, in extreme cases, as a point that coincides with the position of at least one position sensor $S_1$. "Moving through the introduction area G" is understood in the present context as a movement of the new mover 3new, which results in the new mover 3new intersecting a boundary of the introduction area G in at least one spatial dimension, thereby interacting with the at least one position sensor $S_1$ located in the introduction area G and ultimately being located in the effective area MB of the stator 2. As will be explained in detail later on, there is creative scope for design in multiple aspects within the context of the invention with regard to the specific configuration of the introduction area G, so that an introduction area G can, for example, also comprise multiple position sensors, of which all or only selected position sensors are monitored, or so that a position sensor located at the edge of an introduction area G is not necessarily monitored, etc.

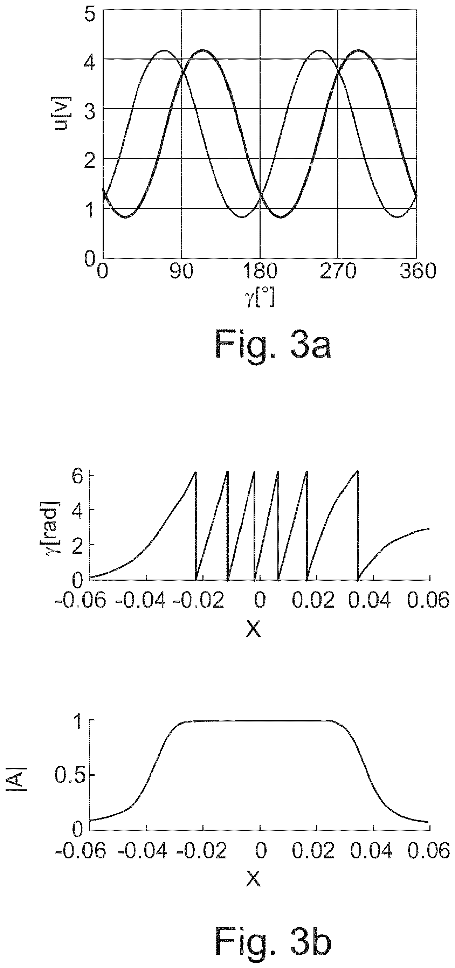

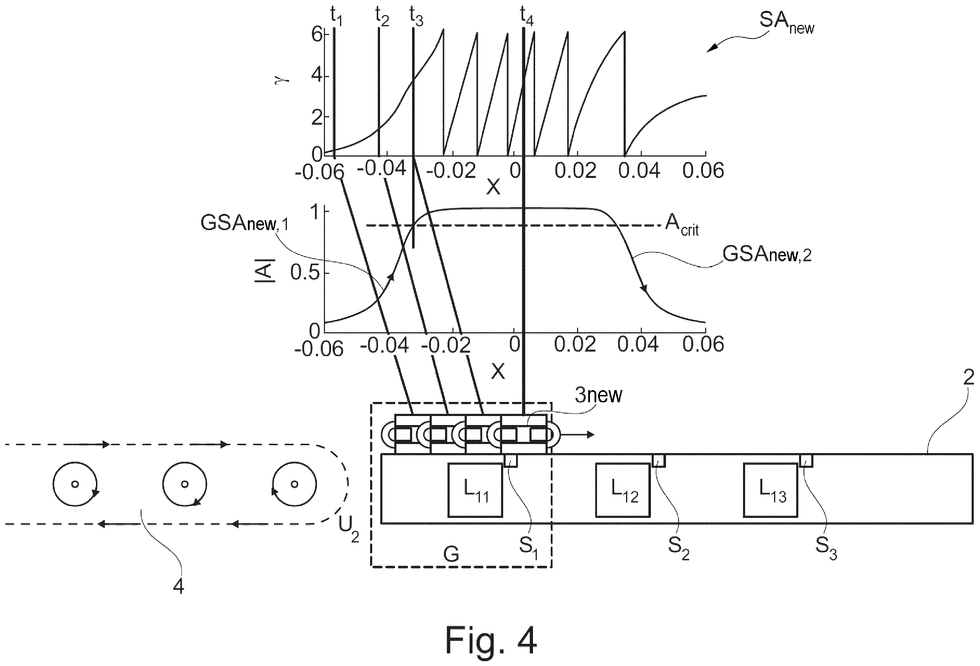

According to the invention, a new sensor response $SA_{new}$ of a position sensor $S_1$, which is arranged in the introduction area G on the stator 2 (in the present case in the transport section A2) of the LLM 1, is therefore examined. It is checked whether the new sensor response $SA_{new}$ fulfills an activation criterion $A_{crit}$, i.e. reaches or exceeds or falls below it, in order to conclude that a new mover 3new has been fed in. In order to explain this check and also the activation criterion $A_{crit}$ in more detail, Figures 3a, 3b and 4 show exemplary signal profiles as they are generated with AMR position sensors ("anisotropic magneto-resistive sensors"), which are typical for LLMs and PMs, as a sensor response. In this context, however, it should be noted that the present invention is by no means limited to the use of AMR position sensors, and that Hall sensors, optical sensors or capacitive sensors can also be used as position sensors which are already installed in the stator 2 and are checked in accordance with the invention. It is also conceivable within the context of the invention that electrical voltages are used which are induced by magnets moving with a new mover 3new, such as in particular by position magnets $P_k$, for example in receiving coils provided specifically for this purpose on the stator 2 of the LLM or PM, or even in the aforementioned drive coils $L_{m1}$, ..., $L_{mn}$, in order to derive the position information required for the invention. It is crucial that no additional sensors are installed for the detection of a new mover 3.

Specifically, Fig. 3a first shows a sine-cosine signal in the form of measured electrical voltage values, which is well known from the prior art. It is known that from such a sensor response (sine and cosine trace), for example in the form of a voltage u, depending on an angle $\gamma$ at which a magnetic field generated by a position magnet $P_k$ strikes the position sensor $S_n$, the position x of a single moving position magnet $P_k$ can be determined, for example in a good approximation as x = r*arctan $(\sin(2\gamma)/\cos(2\gamma))$, with r as a known constant factor, for example r= $\tau_p$ /(2$\pi$). It is often common to represent a sensor response SA in a so-called magnitude-phase representation, with the absolute value |A| for the magnitude of the magnetic field (amplitude of the sine and

$$|A| = \sqrt{u\sin^2(2\gamma) + u\cos^2(2\gamma))}$$

cosine trace , and the aforementioned angle $\gamma$, as shown in Fig. 3b. As will be explained in detail below, sensor responses SA according to Fig.3a and Fig.3b also occur in particular when a mover 3 with a position magnet $P_k$ is moved over an AMR sensor $S_n$. Details on the generation and processing of such position signals are sufficiently known from the prior art and can be found, for example, in the publications EP 4 028 725 B1, WO 2021/105387 A1 or EP 3 376 166 B1, so that further details in this regard will not be discussed here.

If a new mover 3new now moves through the introduction area G according to the invention and thus over the at least one position sensor $S_1$, which is provided in the introduction area G and in the present case is designed as an AMR sensor, scenarios such as that shown in Fig. 4 typically arise. In the case shown in Fig. 4, the at least one position sensor $S_1$ provided in the introduction area G outputs a new sensor response SAnew, which corresponds to a time profile of magnitude values and a time profile of phase values. As shown in Fig. 4, at different points in time $t_1$, $t_2$, $t_3$, $t_4$ during the introduction of the new mover 3new, different magnitude-phase value pairs result, which can be examined according to the invention in order to be able to draw conclusions about a newly introduced mover 3new. In the present case, the new mover 3new enters the introduction area G at the point in time $t_1$, reaches the activation criterion $A_{crit}$ at the point in time $t_3$, and overlaps the at least one position sensor $S_1$ at the point in time $t_4$ in such a way that the position sensor $S_1$ is operated in saturation.

Following on from the aforementioned magnitude-phase value pairs, the predefined activation criterion $A_{crit}$ can, for example, correspond to a magnitude value, as shown in Fig. 4, and it can be concluded that a new mover 3new has been fed in if a new sensor response $SA_{new}$ generated by the at least one position sensor S1 provided in the introduction area G outputs a magnitude value that reaches or exceeds the magnitude value predefined by the activation criterion $A_{crit}$. In practice, an activation criterion $A_{crit}$ specified in the form of an amount value usually corresponds to an overlap of the at least one position sensor $S_1$ by the new mover 3new, specifically because when an AMR sensor is used as a position sensor, the amplitude of the generated sensor responses SA increases until a mover 3 is completely above the position sensor $S_1$, and then decreases again when the mover 3 moves away from the position sensor $S_1$ again. In this sense, the specified activation criterion $A_{crit}$ can also be specified as a minimum overlap of the at least one position sensor $S_1$ arranged in the introduction area G by the new mover 3new.

In advantageous embodiments of the invention, entire magnitude-phase value pairs can also be monitored, and the conclusion regarding a new mover 3new can be made dependent not only on a magnitude value alone, but a phase value to be achieved at a predefined magnitude value can also be monitored. In this case, the activation criterion $A_{crit}$ can correspond to a tuple of magnitude values and phase values to be achieved.

In the practical implementation of the invention, it is advantageous if an isolated value of a sensor response $SA_{new}$ alone is not checked, since sensor responses $SA_{new}$ generated by position sensors $S_n$ are typically subject to noise and can therefore be distorted. For this reason, it is usually advantageous to filter a sensor response $SA_{new}$, for example by means of a low-pass filter, the cut-off frequency of which is adapted to the signal frequencies and/or noise frequencies to be expected in an application. For the purpose of noise suppression, however, it is of course also possible to compare an aspect of a sensor response $SA_{new}$, for example, a magnitude profile, with an activation criterion $A_{crit}$ multiple times, and only to conclude that a new mover 3new has been fed in when the activation criterion $A_{crit}$ has been reached multiple times, for example 10 times or 100 times or 1000 times. In an advantageous manner, however, rising or falling edges in a sensor response SAnew can also be monitored in particular, and it can be concluded, for example, that a new mover 3new has been fed in if a rising or falling edge assumes or exceeds a predefined edge gradient for a predefined period of time.

In the practical implementation of the invention, it is also advantageous for obvious reasons if a sensor response SA to be expected from a position sensor is known a priori, for example in the form of a model sensor response, which can result, for example, from a data sheet or from past measurements. In this way, an activation criterion $A_{crit}$ can be adapted to individual circumstances, which is usually also necessary, since in many cases meaningful values for an activation criterion $A_{crit}$ can only be specified on the basis of existing system knowledge about a model sensor response. If, for example, the activation criterion $A_{crit}$ is selected as a magnitude value greater than a largest magnitude value that can be realized by a position sensor $S_n$, a new mover 3new cannot be detected. In advantageous embodiments of the invention, other attributes of a sensor response SA, such as a phase value or a sensor angle, can be monitored in addition or alternatively to the magnitude of a sensor response SA, wherein the robustness and accuracy of a detection of a new mover 3new can often be further increased.

Regardless of the specific type of analysis of a sensor response SA but also regardless of the specific type of a sensor response SA itself, it always proves to be advantageous in the practical implementation of the invention if the new sensor response $SA_{new}$, which is detected by the at least one position sensor $S_1$ arranged in the introduction area G when the new mover 3 is introduced, is regularly monitored to detect a new mover 3new. For this purpose, the monitoring of the new sensor response $SA_{new}$ can, for example, take place continuously at discrete monitoring points in time, which are spaced apart in particular by a predefined sampling time $T_d$, as is usual in digital signal processing. In this context, this is referred to as temporally unbound detection, since the checking of new sensor responses $SA_{new}$ is no longer linked to a triggering event in this way but is carried out continuously during the operation of the electromagnetic transport device 1 under consideration.

Within the scope of a further embodiment, it may be provided to vary the time interval between points in time, preferably between a maximum time interval $T_{dmax}$ and a minimum time interval $T_{dmin}$, for which, for example, random generators can be used, or a criterion that can be dependent on sensor information recorded during a previous scanning step. Since, as explained multiple times, it is unclear a priori when a new mover 3new will be fed in, earlier detection can be made possible in this way in certain embodiments, since due to the random principle in the selection of the monitoring points in time, it can sometimes be recognized earlier that a new mover 3new is entering, for example when it reaches an introduction area G between two otherwise rigidly predefined checking points in time.

Based on the points in times $t_1...t_4$ shown in Fig. 4, a further, particularly advantageous embodiment of the invention can be presented. It should first be noted that the mere detection of a new mover 3new and the actual integration of the new mover 3new as an effective area mover 3 in a control unit C of an LLM are two different things. This has to do, in particular, with the fact that the generation of position data to describe a position x of a mover 3 taking place in a control unit C, which position data is used to control or regulate or adjust the movement of the mover 3, is usually a highly complex task. In practice, when generating position data in a control unit C, one or more new position sensors are usually determined from a current position x known at a current time step and from a speed of a mover 3 known at this current time step, for example by means of optimization-based prediction, the sensor responses SA of which sensors being processed in a future time step to determine a new position x of the mover 3. On the one hand, this requires exact information about the position of a mover 3 at a certain point in time, and on the other hand, the speed must be known for the prediction. Further details can be found, for example, in WO2021/105387 A1.

If it is now recognized that a new mover 3new is present, this does not automatically mean that a newly recognized position for this mover 3new is immediately also sufficiently accurate to carry out the described determination of future position sensors, which are to be observed at subsequent time steps, and subsequently to determine the aforementioned position data from this. In order to determine the exact position, the speed of a new mover 3new must also be taken into account in many cases, particularly in the case of magnitude profiles such as the one shown in Fig. 3b. With such a magnitude profile, it is often only possible to determine whether the mover 3new is at a position x=-0.03 or x=0.03 by additionally considering the speed of the new mover 3new, since the magnitude profile |A| is symmetrical around the position value x=0.

In order not only to detect a new mover 3new, but also to integrate it into a position control system based on a corresponding generation of position data, it is possible in the context of the invention to proceed as follows: A sensor response gradient $GSA_{new}$ can be determined from a first value SA1 of the new sensor response $SA_{new}$ recorded at a first time t1 and from a second value SA2 of the new sensor response $SA_{new}$ recorded at a second time t2, which is different from the first value SA1. The sensor response gradient $GSA_{new}$ and a position of the at least one position sensor $S_1$ arranged in the introduction area G can also be used to determine a speed, and possibly also a direction of movement, of the new mover 3new and a predicted position of the mover 3new. The speed determined in this way and the predicted position can be submitted to the control unit C for integrating the new mover 3new into the internal position detection system running in the control unit C. The determination of a speed is more robust if a corresponding position sensor is overlapped as far as possible by a new mover 3new, since in such cases the influence of external, in particular magnetic, interference fields is reduced.

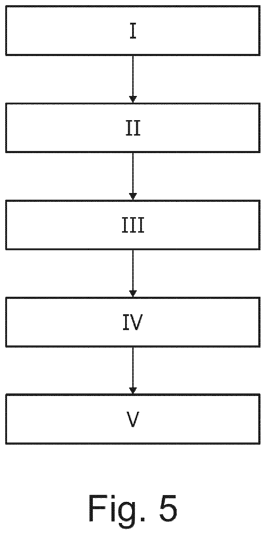

In accordance with the above explanations, the procedure according to the invention comprises a plurality of steps, which are clearly summarized below using the flow chart shown in Fig. 5.

In the case of the LLM 1 considered so far as an electromagnetic transport device 1, the introduction area G is defined in step I. This means that the introduction area G is defined in advance, for example, by a user, for example in the form of a cuboid, a cube, a plane, a straight line or a point, over or through which the newly introduced mover 3new is fed in. Based on the definition of the introduction area G, at least one position sensor $S_1$ located in the introduction area G is determined and subsequently monitored.

In step II, the new mover 3new is initially still outside the introduction area G, which means that the position sensor is not yet addressed by the position magnets $P_k$ present on the new mover 3new. The sensor response SA is below the specified activation criterion $A_{crit}$, such as below 90% of a maximum voltage that can be generated by the position sensor.

In step III, the new mover 3new reaches the introduction area G, which results in the position magnets $P_k$ provided on the new mover 3new responding to the at least one position sensor and subsequently the activation criterion $A_{crit}$ being reached. This information can be used to determine that a new mover 3new is located in the introduction area G. However, it is still unclear whether the introduction area G was passed through from the left or the right. The position sensor can therefore be monitored in a particularly advantageous way with regard to a change of its angle.

In order to optionally determine the direction of movement, data points are therefore collected from the sensor response in step IV, and a gradient is determined in an advantageous manner. It is possible to determine from this gradient and advantageously from existing model knowledge (for example from a model sensor response) whether the new mover 3new moves from the left or from the right through or over the introduction area G. Based on this, a rudimentary position can be calculated. However, since the new sensor response $SA_{new}$ can be greatly influenced by production-related scattering and external magnetic fields in the edge areas, this rudimentary position is usually not yet sufficiently stable to provide the control. The calculated rudimentary position based on the sensor can therefore continue to be observed.

In step V, the position computation has subsequently stabilized to such an extent that external magnetic fields and manufacturing tolerances no longer have any influence on the determined position signal. The internal position detection system running in the control unit C can thus be restarted with the determined rudimentary position as the initial position for the new mover 3new. The new mover 3new is thus basically integrated into the electromagnetic transport device 1 and its control unit C.

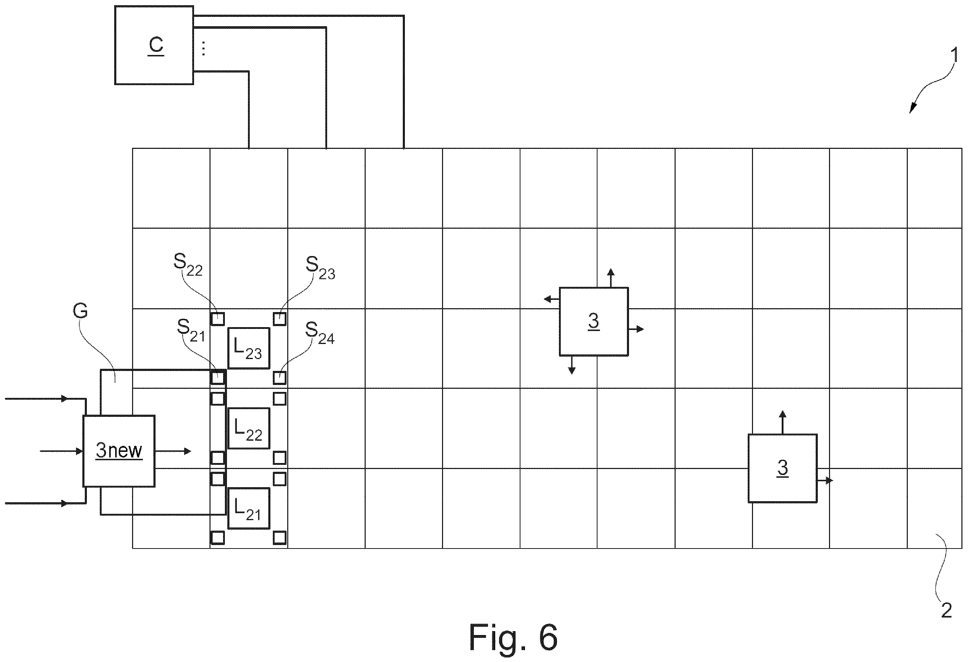

As mentioned earlier, the use of the invention is by no means limited to LLM 1. In particular, the present invention can also be applied to planar motors (PM), which are well known from the relevant literature. In this context, Fig. 6 shows a stator of a PM 1 with an introduction area G according to the invention. An introduction area G in the case of PM 1 typically comprises a plurality of position sensors $S_n$, which can also be the case with LLM 1. If there are multiple position sensors in an introduction area G, for example as previously $S_1$, $S_2$, $S_3$, the sensor responses SA of multiple position sensors can also be monitored simultaneously to detect a new mover 3new, and it can be concluded that a new mover 3new has been fed in if this is suggested by all of the monitored sensor responses SA. For this purpose, step III of the flowchart explained above with reference to Fig. 4 can of course also be adapted.

Within the scope of PM 1, there are a number of other alternative design options, such as that a new mover 3new can be concluded if a single position sensor $S_n$ already generates a sensor response SA that exceeds the activation criterion $A_{crit}$. Sensor responses SAnew from multiple position sensors $S_n$, preferably weighted with suitable weights, can also be combined, in this context this is referred to as sensor fusion, and a sensor fusion response obtained in this way can be monitored in accordance with the invention. These considerations naturally also apply to LLMs, in which an introduction area comprises multiple position sensors $S_n$. With the PM 1, it is often the case that, due to the typically at least one additional degree of freedom compared to LLMs, larger introduction areas G are favorable, which in particular comprise a plurality of position sensors $S_n$. In this way, new movers 3new can also be detected, the movements of which during introduction are more complex than in the case of LLMs, where movements with only one degree of freedom are the rule. In such a case, the activation criterion $A_{crit}$ can require that a certain, predefined number of the plurality of position sensors must provide a sensor response, the magnitude of which exceeds a predefined magnitude threshold in order to detect a new mover 3new.

**Claims**

1. A method for operating an electromagnetic transport device (1) comprising a stator (2), on which a plurality of electric drive coils ($L_{m1}$,...,$L_{mn}$) is arranged, effective area movers (3) located in a magnetic effective area (MB) of the stator (2), and a control unit (C), which electrically controls drive coils ($L_{m1}$,...,$L_{mn}$) which are arranged on the stator (2) and interact with the effective area movers (3) to move the effective area movers (3), wherein a plurality of position sensors ($S_n$) are arranged on the stator (2) and a plurality of position magnets ($P_k$) is arranged on each of the effective area movers (3), so that at least one position sensor ($S_n$) arranged on the stator (2) detects, in the form of a sensor response (SA), a magnetic field caused by a position magnet ($P_k$) which is arranged on an effective area mover (3) and interacts with the at least one position sensor ($S_n$), and wherein a new mover (3new) is introduced into the magnetic effective area (MB) of the stator (2) as a new effective area mover (3) **characterized in that** an introduction area (G) which extends over a part of the stator (2) and comprises at least one position sensor ($S_1$) of the plurality of position sensors ($S_n$) arranged on the stator (2) is defined and the new mover (3new) is moved through the introduction area (G) for introduction into the magnetic effective area (MB) of the stator (2), **in that** a new sensor response ($SA_{new}$) which is detected by the at least one position sensor ($S_1$) arranged in the introduction area (G) when the new mover (3new) is introduced is monitored, **and in that** the control unit (C) starts a control of drive coils ($L_{m1}$,...,$L_{mn}$) interacting with the new mover (3new) to move the new mover (3new) when the new sensor response ($SA_{new}$) reaches or exceeds a predefined activation criterion ($A_{crit}$).

2. The method as claimed in claim 1, **characterized in that** the new sensor response ($SA_{new}$) which is detected by the at least one position sensor ($S_1$) arranged in the introduction area (G) when the new mover (3new) is introduced is monitored cyclically to detect a new mover (3new).

3. The method as claimed in claim 1 or 2, **characterized in that** the predefined activation criterion ($A_{crit}$) corresponds to a predefined minimum overlap of the at least one position sensor ($S_1$) arranged in the introduction area (G) by the new mover (3new).

4. The method as claimed in one of the preceding claims, **characterized in that** the new sensor response ($SA_{new}$) has a temporal magnitude profile and a temporal phase profile **and in that** the activation criterion ($A_{crit}$) is predefined as a magnitude value or as a phase value or is predefined as a tuple comprising a magnitude value and a phase value.

5. The method as claimed in one of the preceding claims, **characterized in that** the activation criterion ($A_{crit}$) is derived from a predefined model sensor response of the position sensor ($S_1$) arranged in the introduction area (G).

6. The method as claimed in one of the preceding claims, **characterized in that** the new sensor response (SA$_{new}$) is low-pass filtered before comparison with the activation criterion (A$_{crit}$).

7. The method as claimed in one of the preceding claims, **characterized in that** a sensor response gradient (GSA$_{new}$) is determined from a first value of the new sensor response (SA$_{new}$) detected at a first point in time (t$_1$) and from a second value of the new sensor response (SA$_{new}$), which differs from the first value and is detected at a second point in time (t$_2$), **in that** a predicted position of the new mover (3new) is determined from the sensor response gradient (GSA$_{new}$) and a position of the at least one position sensor (S$_1$) arranged in the introduction area (G), **and in that** the predicted position is submitted to the control unit (C) for integrating the new mover (3new) into an internal position detection system running in the control unit (C).

8. The method as claimed in one of the preceding claims, **characterized in that** the new mover (3new) is taken into account in an internal position detection system provided in the control unit (C) when the new sensor response (SA$_{new}$) reaches or exceeds the activation criterion (A$_{crit}$).

9. The method as claimed in one of the preceding claims, **characterized in that** the introduction area (G) is defined as a plane, a straight line, or as a point coinciding with the position of the at least one position sensor (S$_1$).

10. The method as claimed in one of the preceding claims, **characterized in that** the at least one position sensor (S$_1$) is designed as an AMR sensor, a Hall sensor, an optical sensor, an inductive sensor or a capacitive sensor.

11. An electromagnetic transport device (1) comprising a stator (2), on which a plurality of electric drive coils (L$_{m1}$,...,L$_{mn}$) is arranged, effective area movers (3) located in a magnetic effective area (MB) of the stator (2), and a control unit (C), which electrically controls drive coils (L$_{m1}$,... ,L$_{mn}$) which are arranged on the stator (2) and interact with the effective area movers (3) to move the effective area movers (3), wherein a plurality of position sensors (S$_n$) are arranged on the stator (2) and a plurality of position magnets (P$_k$) are arranged on each of the effective area movers (3), so that at least one position sensor (S$_n$) arranged on the stator (2) detects, in the form of a sensor response (SA), a magnetic field caused by a magnet (P$_k$) which is arranged on an effective area mover (3) and interacts with the at least one position sensor (Sn), and wherein a new mover (3new) is provided, which is introduced into the magnetic effective area (MB) of the stator (2) as a new effective area mover (3),

**characterized in that** an introduction area (G) which extends over a part of the stator (2) and comprises at least one position sensor (S$_1$) of the plurality of position sensors (S$_n$) arranged on the stator (2) is defined and the new mover (3new) can be moved through the introduction area (G) for introduction into the magnetic effective area (MB) of the stator (2), **in that** the control unit (C) is designed to monitor a new sensor response (SA$_{new}$), which is detected by the at least one position sensor (S$_1$) arranged in the introduction area (G) when the new mover (3) is introduced, and **in that** the control unit (C) is further designed to start a control of drive coils (L$_{m1}$,... , L$_{mn}$) interacting with the new mover (3new) to move the new mover (3new) when the new sensor response (SA$_{new}$) reaches or exceeds a predefined activation criterion (A$_{crit}$).

12. The electromagnetic transport device (1) as claimed in claim 11, **characterized in that** the magnetic transport device (1) is designed as a long stator linear motor or planar motor.

13. A transport system (100) comprising an electromagnetic transport device (1) as claimed in claim 11 or 12 and at least one external feeder for introducing a new mover (3new) into the magnetic effective area (MB) of the electromagnetic transport device (1).

14. The transport system (100) as claimed in claim 13, **characterized in that** the external feeder is designed as a continuous conveyor, preferably as a conveyor belt (4).

Fig. 1

Fig. 2

Fig. 3a

Fig. 3b

Fig. 4

Fig. 5

Fig. 6

EP 4 531 250 A1

Europäisches Patentamt

European Patent Office

Office européen des brevets

# EUROPEAN SEARCH REPORT

Application Number

EP 24 20 1415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/221008 A1 (LU XIAODONG [CA] ET AL) 22 July 2021 (2021-07-22) * paragraphs [0196], [0292], [0330] - [0337], [0475], [0481] - [0506], [0511], [0529]; figures 1A-B13a-45b,47-48, 50a-52 * | 1-5,7-14 | INV. H02K11/215 H02K41/03 H02P6/00 H02P6/16 H02P25/064 |
| | ----- | | |
| X | US 2016/161288 A1 (LU XIAODONG [CA]) 9 June 2016 (2016-06-09) * paragraphs [0042], [0061] - [0066], [0101] - [0107], [0136] - [0140]; figures 1-19 * | 1-6,8-12 | |
| | ----- | | |
| X | US 2019/372447 A1 (WEBER ANDREAS [AT] ET AL) 5 December 2019 (2019-12-05) * paragraphs [0003], [0025] - [0030], [0045], [0052]; figures 1-5 * | 1-5,8-14 | |
| | ----- | | |
| X | US 2021/088081 A1 (HUANG YUHONG [US] ET AL) 25 March 2021 (2021-03-25) * paragraphs [0045] - [0050]; figures 1-18 * | 1-5,8-12 | TECHNICAL FIELDS SEARCHED (IPC) |
| | ----- | | H02K |
| X | US 2019/006930 A1 (WEBER ANDREAS [AT] ET AL) 3 January 2019 (2019-01-03) * paragraphs [0019] - [0020], [0024], [0037] - [0038]; figures 1-3 * | 1-5,8-12 | H02P |
| | ----- | | |
| A | CN 115 102 361 A (UNIV SOOCHOW) 23 September 2022 (2022-09-23) * paragraphs [0048] - [0080]; figures 1-10 * | 7 | |
| | ----- | | |

The present search report has been drawn up for all claims

| Place of search | Date of completion of the search | Examiner |
|---|---|---|
| The Hague | 20 February 2025 | Maître, Jérôme |

## ANNEX TO THE EUROPEAN SEARCH REPORT
## ON EUROPEAN PATENT APPLICATION NO.

EP 24 20 1415

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| US 2021221008 | A1 | 22-07-2021 | CN | 111279595 A | 12-06-2020 |
| | | | CN | 115085508 A | 20-09-2022 |
| | | | EP | 3602759 A1 | 05-02-2020 |
| | | | EP | 4236042 A2 | 30-08-2023 |
| | | | US | 2020030995 A1 | 30-01-2020 |
| | | | US | 2021221008 A1 | 22-07-2021 |
| | | | US | 2023302663 A1 | 28-09-2023 |
| | | | WO | 2018176137 A1 | 04-10-2018 |
| US 2016161288 | A1 | 09-06-2016 | CN | 105452812 A | 30-03-2016 |
| | | | EP | 3014219 A1 | 04-05-2016 |
| | | | JP | 6373992 B2 | 15-08-2018 |
| | | | JP | 2016527518 A | 08-09-2016 |
| | | | US | 2016161288 A1 | 09-06-2016 |
| | | | US | 2018094949 A1 | 05-04-2018 |
| | | | US | 2020370925 A1 | 26-11-2020 |
| | | | WO | 2015017933 A1 | 12-02-2015 |
| US 2019372447 | A1 | 05-12-2019 | CA | 3045031 A1 | 05-12-2019 |
| | | | CN | 110562748 A | 13-12-2019 |
| | | | EP | 3363751 A2 | 22-08-2018 |
| | | | JP | 7452952 B2 | 19-03-2024 |
| | | | JP | 2020025436 A | 13-02-2020 |
| | | | KR | 20190138603 A | 13-12-2019 |
| | | | US | 2019372447 A1 | 05-12-2019 |
| US 2021088081 | A1 | 25-03-2021 | NONE | | |
| US 2019006930 | A1 | 03-01-2019 | AT | 520089 A4 | 15-01-2019 |
| | | | CA | 3009692 A1 | 29-12-2018 |
| | | | CN | 109217768 A | 15-01-2019 |
| | | | EP | 3422558 A1 | 02-01-2019 |
| | | | US | 2019006930 A1 | 03-01-2019 |
| CN 115102361 | A | 23-09-2022 | CN | 115102361 A | 23-09-2022 |
| | | | WO | 2024000954 A1 | 04-01-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6876107 B2
- US 9202719 B2
- WO 2013143783 A1
- WO 9850760 A2
- US 20130074724 A1
- WO 2004103792 A1

- EP 1270311 B1
- EP 3904249 B1
- EP 3109998 B1
- EP 4028725 B1
- WO 2021105387 A1
- EP 3376166 B1